# EUROPEAN PATENT APPLICATION

(11) **EP 2 011 632 A2**
(43) Date of publication of application: **07.01.2009**
(21) Application number: 08010894.7
(22) Date of filing: 16.06.2008
(51) Int. Cl.: B29C 67/24, B28B 11/24

(54) **Process for manufacturing aggregate slabs by means of microwave irradiation and resulting aggregate slabs**

(30) Priority: 06.07.2007 ES 200701911
(71) Applicant: COSENTINO, S.A., 04850 Cantoria Almeria (ES)
(72) Inventor: Cabrera, Juan Monzo, 04850 Cantoria (Almeria) (ES); Moreno, José Luis Ramon, 04850 Cantoria (Almeria) (ES); Fernandez, Jesus Romera, 04850 Cantoria (Almeria) (ES); Rodriguez Garcia, Salvador Cristobal, 04850 Cantoria (Almeria) (ES)
(74) Representative: Gonzalez-Alberto Rodriguez, Natalia

(57) **Abstract**

The present invention relates to a process for manufacturing aggregate slabs by means of microwave irradiation and aggregate slabs manufactured by means of microwave irradiation, by means of which process the resins contained in an aggregate slab mass are cured by means of microwave irradiation.

## Description

### Field of the Invention

The present invention, a process for manufacturing aggregate slabs by means of microwave irradiation and aggregate slabs manufactured by means of microwave irradiation, relates to a process whereby the resins contained in an aggregate slab mass are cured by means of microwave irradiation. The present invention particularly relates to a process for manufacturing quartz aggregate slabs by means of microwave irradiation. This manufacturing process has its application in the artificial stone industry.

### Background of the Invention

Polymeric resins are used in the process of manufacturing aggregate slabs. One of the main functions of said resins is the hardening of the aggregate slab. This hardening of the slab is due to the polymerization (curing) process occurring in the resin as detailed below.

The resins used in the process of manufacturing aggregate slabs are polymers, the properties of which are determined by the nature of the monomers making up the polymer, as well as by the distribution of the resin molecules during the reactions taking place in the resin polymerization (curing) process.

Specifically, the resins used in the process of manufacturing aggregate slabs are a class of synthetic polymers called thermosetting polymers. Due to the effect of an inducing agent, which can be heat transfer or chemical agents, this type of polymer undergoes a series of chemical reactions leading to the formation of a three-dimensional network formed by the bonding of different polymeric chains. In other words, due to the effect of an inducing agent, crosslinking of the polymer chains occurs, which causes the hardening of the resin. The previous process is known as resin polymerization or curing and will give rise to a change in the resin properties such as the hardening of the same. The resin properties undergo increasingly greater changes in the polymerization process as the polymer crosslinking degree increases.

Before the polymerization process begins, the resin is in fluid state, but as the polymerization process draws on, the resin gradually becomes increasingly more viscous until forming an elastic solid. This critical point in which the resin is converted into a viscous solid is referred to as gelation and it occurs when a characteristic temperature, called glass transition temperature (Tg), is reached.

During the course of the curing process, vitrification of the resin occurs. Vitrification takes place when the glass transition temperature (Tg) reaches the isothermal cure temperature value. This vitrification point implies the solidification of the material, i.e., going from a viscous liquid state to a glassy solid state. The glassy state of the resin is reached as a consequence of an increase of the molecular weight and the crosslinking density during the polymerization process.

The previous polymerization or curing process can be accelerated if heat is applied. Electric ovens and, to a lesser extent, propane ovens are used today for curing resins. In these types of ovens, heating begins on the face of the aggregate slab. The heat does not directly penetrate the aggregate slab, but the rest of the aggregate slab will gradually be heated by means of heat transfer by conduction.

This type of heating results in a temperature gradient from the surface of the face to the inside of the aggregate slab. Due to the form in which heat is transmitted, one of the main drawbacks of this form of heat application is the difference of temperatures existing in the aggregate slab. This drawback causes the inside of the slab to be at a lower temperature than the surfaces, and therefore homogeneous curing of the resin does not occur.

Another drawback associated to this form of heat transmission by conduction is that in this type of oven the energy efficiency is very low since very high working powers are needed to reach complete resin polymerization. Furthermore, it is a slow curing technique since the resin is heated by conduction of the heat and not directly. For that reason, production lines for curing resins by means of electric ovens are very long due to the time needed for resin polymerization, it also being necessary to store the slabs once heated so that the polymerization process ends completely over time.

Another technique used for accelerating the curing of resins is infrared heating. In this case, infrared radiation photosensitive resins are used. This method accelerates the curing time with respect to the time needed in the case of using electric or propane ovens. Nevertheless, as in the case of electric or propane ovens, only the surface is heated. The fact that only the infrared radiation acts directly, heating the surface of the slabs, has the drawback that the inside of the slab is not equally heated, and therefore the resin inside the slab is semi-cured.

Microwave irradiation is an alternative for introducing thermal energy in chemical reactions and therefore accelerating the resin curing process. Microwaves are a type of electromagnetic waves in the frequency spectrum comprised between 300 MHz and 300 GHz.

When a material is irradiated with microwaves, the material preferably absorbs the microwaves. The frequencies at which the material absorbs microwaves are called resonance frequencies and depend on the polarity of the molecules forming the material. The mentioned polarity of the molecules can be used for selective curing, which allows obtaining results not achieved by conventional heating. In other words, exclusive heating of the resin can be obtained without needing to heat the rest of the materials making up the aggregate slab.

In general, the form in which a material responds to microwave irradiation depends mainly on the dielectric characteristic of the material. The complex dielectric constant describes said dielectric properties of a material, and is expressed as the sum of the real part (ε') and the imaginary part (e"). The real part represents the ability of a material to be polarized by an external electromagnetic field and the imaginary part quantifies the efficiency with which the electromagnetic energy is converted into heat.

The ratio of both magnitudes (ε"/ε' = tan 5) is normally used. The previous expression is called loss tangent. Large values of this parameter indicate good susceptibility to microwave energy which is the same as good sensitivity to microwave irradiation.

Therefore, given that the selective character associated to microwave radiation is derived from better energy efficiency with respect to heating techniques by means of electric ovens and/or infrared radiation. The energy savings is due to the fact that microwave energy will act where polarity exists, i.e., where unpolymerized resin exists, without affecting other components of the mixture and parts of the resin that are already polarized.

The use of microwaves for curing resins used for marble reinforcement and finish is known in the state of the art.

Thus, for example, patent application WO2005121046 A1 performs the curing of a resin layer which is applied on natural marble by means of microwave irradiation. In this case, it is necessary to pre-heat the stone for applying the resin and further curing the resin by means of microwave irradiation.

In this case, the resin is applied on natural stone, but it is not mixed with fillers as is the case of aggregate slabs. In addition, it is necessary to pre-heat the marble stone before applying the resin.

In the case of patent application JP4197609, an artificial marble product containing unsaturated polyester as resin is cured by means of microwave irradiation. Nevertheless, in this case it is necessary to pre-heat the material before performing the curing with microwave radiation.

As seen in both cases, microwave irradiation is performed, it being necessary to pre-heat the material.

By means of the present invention, the need to pre-heat the slabs is eliminated, being able to cure the resin by means of microwave irradiation directly without any prior preheating step.

In the case of quartz aggregate slabs, patent application ES2187313 A1 describes the process of manufacturing this type of element and how the curing of the same is performed. The process starts in the storage tanks where the resin in liquid state and mixtures of ground particles are mixed at room temperature, then passing to the mixer and from there, through conveyor belts, to a distributor where a slab is formed inside a frame which then passes on to the vacuum press by means of another belt for compaction by vibro-compression. Then once the slab has been compacted, it is introduced in a conventional oven for the curing thereof. In this case, heat transmission occurs by the contact of hot steel plates with the aggregate slab to cure. By means of the contact of the steel plates, the heat is transmitted by convection from outside to inside. When curing quartz aggregate slabs by means of a conventional oven, a time of 30 minutes is necessary to obtain optimum curing of the slab.

As is done today in the manufacture of quartz aggregate slabs, a transverse movement of the slab which still has not yet cured occurs at the outlet of the vacuum press. This movement is due to the fact that it is necessary to align the slab with the oven so that the curing of the aggregate slab begins.

This transverse movement causes undulations in the surface of the non-cured slab. These unwanted undulations will have to be eliminated in the process of rectifying the aggregate slab. As the final thickness of the slab after rectification of the undulations will be less, the slabs at the beginning of the process have an additional 5% mass which will subsequently have to be eliminated in the process of rectifying the undulations caused by the previous transverse movement.

By means of the present invention of curing slabs with microwave radiation, this percentage of additional mass can be saved since a transverse movement of the aggregate slabs before their curing is not necessary. Therefore, undulations due to the transverse movement of the aggregate slabs will be prevented.

In addition, another advantage derived from microwave irradiation is the curing time, which is considerably less with respect to the 30 minutes which are necessary in the current manufacturing process. Since heat transmission by conduction does not exist, the transmission of energy in the form of heat by microwaves is done more homogeneously, affecting the entire mass equally.

Another beneficial effect derived from the use of microwave irradiation is homogeneous polymerization. In heating by conduction, the heat is transmitted from the outside of the slab towards the inside of the slab, producing a high temperature gradient, i.e., the outside of the slab will have a higher temperature than the inside of the slab, hence, polymerization will be unequal or, what is the same, at the wrong timing between the layers.

For all that and since microwave irradiation improves resin polymerization, the end product will have improved mechanical properties with respect to a product cured by means of heat conduction techniques.

Thus, for example, the aggregate slabs cured by means of microwave irradiation have a better bending strength, a better compression factor and a better expansion factor.

In short, curing aggregate slabs by means of microwave irradiation improves the rate of the polymerization reaction, reducing the times needed for obtaining a total curing of the aggregate slabs. In the second place, the temperature gradient between the outside of the aggregate slab and the inside of the same decreases, giving rise to homogeneous polymerization of the slab. Derived from a homogeneous polarization, the resulting aggregate slab will have better mechanical properties than slabs polymerized by means of conventional irradiation. Finally, microwave irradiation allows adjusting the glass temperature of each aggregate variety according to the materials making up the aggregate slab and, therefore, obtaining a polymerization adapted to each particular composition of the aggregate slab.

### Description of the Invention

The present invention relates to a process of manufacturing aggregate slabs by means of microwave irradiation and, in particular, to a process of manufacturing quartz aggregate slabs in which the curing of the quartz aggregate slabs is performed by means of microwave irradiation.

The process of manufacturing an aggregate slab starts with the mixture of ground particles having different grain sizes of silicas, crystals, ferrosilicon quartz granites, feldspar and/or other materials such as plastics, marbles and metals in addition to liquid pigments and/or antibacterial agents.

Unsaturated polyester and/or epoxy-type resin is added to the previous mixture of ground particles. These resins are mixed with polar catalysts and chemical hardening agents improving microwave absorption, accelerating the curing of the resin. Preferably, said catalysts are calcium carbonate or calcium sulfate.

Once all the materials making up the aggregate slab have been mixed, the slab which must be polymerized is molded. The molding is necessary due to the quick polymerization of the aggregate, the thickness of the slab to be polymerized being defined. The rest of the slab dimensions (width and length) are defined by the press used to define the slab surface.

Once the slab has been molded, it must be conveyed into the microwave oven where the curing of the slab occurs. The slab must be conveyed at a line speed which does not cause deformations in the slab format, thus preventing possible undulations in the slab derived from the movement. The conveyance into the microwave oven must be done using a belt with dielectric properties transparent to microwaves, i.e., which does not absorb microwave energy, such as Teflon.

The line speed is determined by the length of the microwave oven and the power of said oven. By way of example, for a microwave oven at a frequency of 2.45 GHz with a microwave power of 20 KW uniformly distributed and an oven length of 6 m, the line speed should preferably be 1.5 m/min, approximately equivalent to 2 min per slab.

Once the slab is molded and conveyed into the microwave oven, microwave irradiation is performed for its curing. The oven has individual microwave generators, preferably with a power of 12 Kw each up to the total power of the oven, preferably comprised between 60 and 190 KW.

The power of the oven varies according to the dielectric characteristics of the slab and the size of the aggregate slabs, which can have a thickness between 1 and 3.5 cm. Power ranges for different sizes of aggregate slabs are preferably:
- For 305x140x3 cm³ slabs, the power of the curing oven ranges between 150-190 Kw.
- For 305x140x2 cm³ slabs, the power of the curing oven ranges between 100-130 Kw.
- For 305x140x1.2 cm³ slabs, the power of the curing oven ranges between 60-80 Kw.

In general, the applied radiation will be comprised between 1 and 30 w/cm³ during a time which can range between 10 and 300 seconds, preventing a temperature in the mixture higher than the temperature of exothermic reaction of the resin. As a general rule, the temperature of the resin should not exceed the temperature of 160°C, this temperature being the result of the heat supplied by the microwave absorption and by the heat generated by the exotherm of the reaction.

In turn, the microwave oven is provided with stirrers which are moving metallic elements ensuring a multimode electromagnetic field and better distribution of the same to prevent cold field spots, as well as to ensure uniformity in the absorption of electromagnetic energy.

Microwave irradiation can be performed continuously or at fixed time intervals.

In the case of performing continuous irradiation, the aggregate slab is conveyed through the inside of the oven at a continuous speed such that microwave irradiation occurs while the slab moves through the oven on a conveyor belt. In this case, an oven length of preferably 5 to 10 m will be necessary.

This manner of microwave irradiation in a continuous form has the advantage of providing a longer curing time, if necessary, due to changes in the mixture formulation or external environmental conditions, i.e., changing the speed of the conveyor belt or the number of operating microwave generators is enough to increase or decrease the irradiation time.

In the case of irradiation at time intervals, the slab is introduced into the oven and kept there the time sufficient for its curing. This time depends on the materials making up the aggregate slab and on the dimensions of the same. The curing time for irradiation at intervals would range approximately between 1 and 5 minutes, depending on the dimensions and type of aggregate, preferably being 2 minutes.

Once microwave irradiation occurs, it is convenient to store the aggregate slab in a buffer warehouse after it has left the microwave oven where the temperature of the slab gradually decreases until complete polymerization of the slab is obtained. The slabs can be accumulated in trays for a maximum time of approximately 10 minutes.

The aggregate slabs manufactured by means of the present process would be used as countertops, indoor or outdoor tiles, home furniture, outdoor furniture, decorative boards, facades, floor tiles, bathroom elements and all types of stone-like structures.

Due to environmental regulations, the surpluses of this type of aggregate slab materials cannot be disposed of without inerting (curing). Therefore, the present process of curing of aggregate slabs by means of microwave irradiation can be applied for inerting (curing) the surpluses in the manufacture before their disposal. In this case, it is not necessary to perform a molding and the surpluses are directly introduced in the oven for their curing. Once microwave irradiation has ended, the surpluses can be disposed of without any environmental hazards upon exiting the oven.

### Description of a Preferred Embodiment

The present invention is further illustrated by means of the following examples in which the acceleration of the curing of the quartz aggregate mixtures by means of the application of microwaves is shown, without intending to limit the scope of the invention.

### Example 1

polymerization tests applying microwaves at 2.45 GHz to a surplus mixture of Silestone® White Zeus product were conducted. Two kg of the unpressed surplus mixture were used for polymerization.

The White Zeus formulation in percents by weight is approximately:
- Between 8% and 15% unsaturated polyester resin
- Between 25% and 30% micronized cristobalite
- Between 50% and 60% feldspar
- 15% and 20% colorant
- Several additives: MEMO silane, accelerator, catalyst and antibacterial agent

The mixture is introduced in an oven at 1000 W during an irradiation time of 240 seconds. Good polymerization, without styrene remains, was observed which confirms the complete polymerization of the surplus.

### Example 2

Polymerization tests applying microwaves at 2.45 GHz to a slab of Silestone® White Capri were conducted. The slab was prepared in a Breton laboratory press by vibro-compression. The dimensions of the slab were 320x320x20 mm. The White Capri formulation in percents by weight is approximately:
- Between 5% and 10% unsaturated polyester resin
- Between 30% and 35% micronized cristobalite
- Between 50% and 60% micronized silica
- Between 5% and 8% ground silica
- Between 30% and 35% feldspar
- 10% and 15% colorant
- Several additives: adhesion promoter, accelerator, catalyst and antibacterial agent

The slab was introduced in a microwave oven and irradiated during 280 seconds at 1200 W. Good polymerization was observed.

The following tables comparatively show the aggregate slab curing processes by means of microwave oven and conventional ovens according to different aspects.

Tables 1 and 2 show the reduction in time involved with the use of microwave irradiation in aggregate slabs of different sizes.

**Table 1: Continuous irradiation times**

| DIMENSIONS | MICROWAVE OVEN | CONVENTIONAL OVEN |
|---|---|---|
| 305x140x3 cm³ | 4 min | -- |
| 305x140x2 cm³ | 4 min | -- |
| 305x140x1.2 cm³ | 4 min | -- |

**Table 2: Irradiation times at time intervals**

| DIMENSIONS | MICROWAVE OVEN | CONVENTIONAL OVEN |
|---|---|---|
| 305x140x3 cm³ | 4 min | 40 min |
| 305x140x2 cm³ | 4 min | 35 min |
| 305x140x1.2 cm³ | 4 min | 30 min |

Tables 3 and 4 show the energy efficiency derived from the use of microwave irradiation.

**Table 3: Energy for continuous irradiation**

| DIMENSIONS | MICROWAVE OVEN | CONVENTIONAL OVEN |
|---|---|---|
| 305x140x3 cm³ | 31,000 KJ | -- |
| 305x140x2 cm³ | 22,500 KJ | -- |
| 305x140x1.2 cm³ | 18,000 KJ | -- |

**Table 4: Energy for irradiation at time intervals**

| DIMENSIONS | MICROWAVE OVEN | CONVENTIONAL OVEN |
|---|---|---|
| 305x140x3 cm³ | 31,000 KJ | 31,000 KJ |
| 305x140x2 cm³ | 22,500 KJ | 27,000 KJ |
| 305x140x1.2 cm³ | 18,000 KJ | 23,000 KJ |

Table 5 shows how polymerization by microwave irradiation improves the properties of one and the same aggregate slab.

**Table 5: Curing efficiency**

| PROPERTIES | MICROWAVE OVEN | CONVENTIONAL OVEN |
|---|---|---|
| Compression factor | 150-260 MPa | 130-260 MPa |
| Expansion factor | 20-40x10⁻⁶ mm/°C | 20-40x10⁻⁶ mm/°C |
| Bending strength | 50-75 MPa | 40-70 MPa |

## Claims

1. A process for manufacturing aggregate slabs, of the type made up of resins and fillers of different materials, **characterized in that** it comprises;
- Molding the aggregate slab according to the dielectric properties of said materials making up the aggregate slab.
- Conveying said aggregate slab into a microwave oven,
- Irradiating said aggregate slab with microwaves inside the oven with a power depending on the molding performed.
- Cooling and storing said aggregate slab.

2. The process according to claim 1, **characterized in that** said aggregate slabs are quartz aggregate slabs.

3. The process according to claim 1 or 2, **characterized in that** said microwave irradiation is performed continuously.

4. The process according to claim 1 or 2, **characterized in that** said microwave irradiation is performed at time intervals.

5. The process according to claim 1 or 2, **characterized in that** the speed of conveying the slab inside the oven depends on the power and length of said microwave oven.

6. The process according to claim 1 or 2, **characterized in that** said microwave irradiation is performed at a power of between 0.1 and 20 W/cm.

7. The process according to claim 1 or 2, **characterized in that** said microwave irradiation is performed between 10 and 300 seconds.

8. An aggregate slab made up of resins and fillers of different materials molded according to the dielectric properties of the materials making up said aggregate slab, **characterized in that** the curing of said resins is performed by means of microwave irradiation.

9. The aggregate slab according to claim 8, **characterized in that** it is made up of ground particles having different grain sizes of silicas, crystals, ferrosilicon quartz granites, feldspar and/or other materials such as plastics, marbles and metals as well as liquid pigments and/or antibacterial agents.

10. The aggregate slab according to claim 8, **characterized in that** said resin to be polymerized is an unsaturated polyester.

11. The slab according to claim 9, **characterized in that** curing catalysts are added to said resin.

12. The slab according to claim 10, **characterized in that** said curing catalysts are calcium carbonate or calcium sulfate.
